# EUROPEAN PATENT APPLICATION

(11) **EP 1 033 898 A1**
(43) Date of publication of application: **06.09.2000**
(21) Application number: 99440038.0
(22) Date of filing: 01.03.1999
(51) Int. Cl.: H04Q 7/38, H04M 3/58

(54) **Changing terminals during a call**

(71) Applicant: ALCATEL, 75008 Paris (FR)
(72) Inventor: Bertin, Nicolas, 67400 Illkirch (FR); Daniel, Patrick, 67640 Lipsheim (FR); Ferveur, Christian, 67640 Fegersheim (FR); Fischer, Bertrand, 67115 Plobsheim (FR); Geyer, Claude, 67640 Fegersheim (FR); WINTZ, Agnès, 68520 Burnhaupt le Haut (FR)
(74) Representative: van Bommel, Jan Peter

(57) **Abstract**

By providing a system comprising four system-parts like a GSM-handset, a DECT-handset, a pc and a switch with a detector for detecting a request change signal originating from or sent to one of said system-parts and by in response to said detecting during a call with a further terminal changing a first system-part into a second system-part whereby during a time-interval both system-parts are involved in said call, the change can be made without a user missing a moment of said call, and the system becomes more user-friendly, especially when said time-interval can be adapted or depends upon the kinds of signals which are exchanged or the kinds of terminals which are used.

## Description

The invention relates to a system comprising at least
- a first system-part substantially in the form of a first terminal,
- a second system-part substantially in the form of a second terminal,
- a third system-part substantially in the form of a switch for establishing a coupling between said first system-part and a further terminal.

Such a system is of common general knowledge. Said first terminal is for example a GSM-terminal, said second terminal is for example a DECT-terminal or an ISDN-terminal, said switch is for example a PABX and said further terminal is for example a GSM-terminal or a DECT-terminal or an ISDN-terminal or an analog terminal or even a server providing Internet access. Via said switch, each pair of said three terminals can be coupled.

This system is disadvantageous, inter alia, because of not being user-friendly sufficiently.

It is an object of the invention, inter alia, to provide a system as described in the preamble which is more user-friendly.

Thereto, the system according to the invention is characterised in that
- at least one of said first and third system-parts comprises receiving means for receiving a request change signal for requesting to change said coupling between said first system-part and said further terminal into a further coupling between said second system-part and said further terminal,
- at least one of said first and third system-parts comprises detecting means for detection of said request change signal,
- at least one of said first and third system-parts comprises coupling means for firstly establishing said coupling only and for secondly establishing said coupling and said further coupling and for thirdly establishing said further coupling only.

By detecting said request change signal (comprising for example a first destination code defining a first destination of said first terminal and/or comprising for example a second destination code defining a second destination of said second terminal), it becomes possible to in addition to said established coupling establish said further coupling coupled to said coupling for interconnecting said three terminals and to subsequently disconnect said coupling (between said first terminal and said further terminal) and just keep said further coupling (between said second terminal and said further terminal, and the system becomes more user-friendly.

A user being involved in a call via his GSM-handset can then during said call introduce his DECT-handset and then release his GSM-handset without missing a moment of said call.

The invention is based on the insight, inter alia, that in the near future, a user-friendly system should provide to each user at least two different interconnectable terminals to give the user more possibilities.

The invention solves the problem, inter alia, of providing a more user-friendly system.

An embodiment of the system according to the invention is characterised in that at least one of said first and third system-parts comprises timing means for defining a predefined time-interval, with said coupling means being adapted for before start of said predefined time-interval establishing said coupling only and for during said predefined time-interval establishing said coupling and said further coupling and for after expiry of said predefined time-interval establishing said further coupling only.

By using said timing means, said system becomes even more user-friendly due to for example allowing a user to adjust time-intervals or allowing different time-intervals for different terminals.

For example in case of audio being exchanged a time-interval could be one second and in case of video being exchanged a time-interval could be five seconds.

A next embodiment of the system according to the invention is characterised in that said detecting means are adapted to detect a timing code in said request change signal for defining a length of said predefined time-interval.

By detecting said timing code in said request change signal the part which sends the request change signal has the option of defining said length of said time-interval.

A next embodiment is characterised in that the system comprises a fourth system-part substantially in the form of a third terminal, whereby
- at least one of said first and third and fourth system-parts comprises further receiving means for receiving a further request change signal for requesting to change at least one of said coupling between said first system-part and said further terminal and a yet further coupling between said fourth system-part and said further terminal into said further coupling between said second system-part and said further terminal,
- at least one of said first and third and fourth system-parts comprises further detecting means for detection of said further request change signal,
- at least one of said first and second and third system-parts comprises further coupling means for firstly establishing said coupling and said yet further coupling only and for secondly establishing said coupling and said yet further coupling and said further coupling and for thirdly establishing said further coupling and at most an other one of said coupling and said yet further coupling.

A user receiving being involved in a call via his GSM-handset (for audio/video) and via his DECT-handset (for video), can now during said call change his DECT-handset into his pc (for video) without missing a moment of said call.

The invention further relates to a system-part for use in a system comprising at least
- a first terminal,
- a second terminal,
- a switch for establishing a coupling between said first terminal and a further terminal.

This system-part is characterised in that said system-part comprises at least
- receiving means for receiving a request change signal for requesting to change said coupling between said first terminal and said further terminal into a further coupling between said second terminal and said further terminal,
- detecting means for detection of said request change signal,
- coupling means for firstly establishing said coupling only and for secondly establishing said coupling and said further coupling and for thirdly establishing said further coupling only.

All references including further references cited with respect to and/or inside said references are considered to be incorporated in this patent application.

The invention will be explained in greater detail at the hand of embodiments disclosed in the drawing, whereby

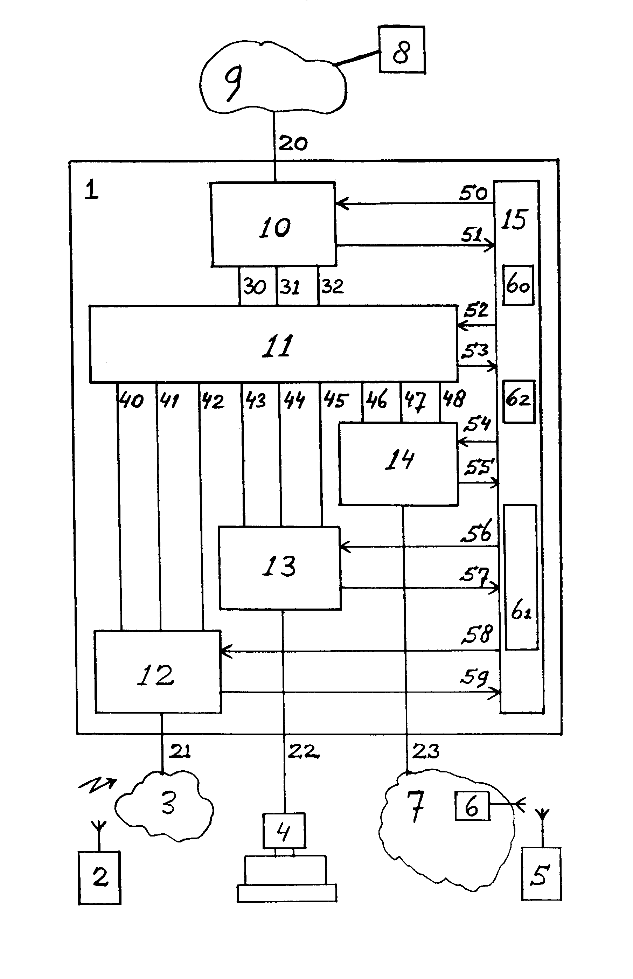

figure 1 discloses a system according to the invention comprising at least one system-part according to the invention.

The system according to the invention disclosed in figure 1 comprises a first system-part in the form of a first terminal 2, a second system-part in the form of a second terminal 5, a third system-part in the form of a switch 1, a further terminal 8 and a fourth system-part in the form of a third terminal 4. Terminal 2 (like for example a GSM terminal or a DECT terminal or a corded terminal or a corded or cordless enhanced personal assistant like a small, light notebook) is coupled to switch 1 via network 3 (like for example a GSM network or a DECT network or a fixed network) and connection 21. Terminal 5 (like for example a DECT terminal or a GSM terminal or a corded terminal or a corded or cordless enhanced personal assistant like a small, light notebook) is coupled to switch 1 via network 7 (like for example a DECT network comprising a DECT base station 6 or a GSM network or a fixed network) and connection 23. Terminal 4 (like for example a corded terminal in the form of a pc or a GSM terminal or a DECT terminal or a corded or cordless enhanced personal assistant like a small, light notebook) is coupled to switch 1 via connection 22 and possibly via a network (like for example a DECT network or a GSM network or a fixed network) not shown in figure 1. Further terminal 8 is coupled to switch 1 via a network 9 (like for example a DECT network or a GSM network or a fixed network) and connection 20.

Switch 1 comprises receiving/transmitting means 10, of which a first side is coupled to connection 20 and of which a control input is coupled to detection/deciding means 15 via connection 50 and of which a control output is coupled to detection/deciding means 15 via connection 51 and of which a second side is coupled to coupling/removal means 11 via for example three connections 30, 31 and 32. Switch 1 comprises receiving/transmitting means 12 of which a first side is coupled to connection 21 and of which a control input is coupled to detection/deciding means 15 via connection 58 and of which a control output is coupled to detection/deciding means 15 via connection 59 and of which a second side is coupled to coupling/removal means 11 via for example three connections 40, 41 and 42. Switch 1 comprises receiving/transmitting means 13, of which a first side is coupled to connection 22 and of which a control input is coupled to detection/deciding means 15 via connection 56 and of which a control output is coupled to detection/deciding means 15 via connection 57 and of which a second side is coupled to coupling/removal means 11 via for example three connections 43, 44 and 45. Switch 1 comprises receiving/transmitting means 14, of which a first side is coupled to connection 23 and of which a control input is coupled to detection/deciding means 15 via connection 54 and of which a control output is coupled to detection/deciding means 15 via connection 55 and of which a second side is coupled to coupling/removal means 11 via for example three connections 46, 47 and 48. Coupling/removal means 11 comprise a control input which is coupled to detection/deciding means 15 via connection 52 and a control output which is coupled to detection/deciding means 15 via connection 53. Detection/deciding means 15 comprise timing means 60, memory means 61 and authentication means 62.

The system according to the invention as disclosed in figure 1 functions as follows.

According to a first embodiment, at said terminal 8, a subscriber decides to call terminal 2, as a consequence of which a set-up signal is transmitted from terminal 8, via network 9 and connection 20 to switch 1. At switch 1, receiving/transmitting means 10 receive said set-up signal, and via connection 51 detection/deciding means 15 detect said set-up signal, including for example a first destination code defining a first destination of terminal 2. Via connection 52 detection/deciding means 15 control coupling/removal means 11 in such a way that said set-up signal is transmitted, via for example connection 30 and connection 40, to receiving/transmitting means 12, which send said set-up signal via connection 21 and network 3 to terminal 2 which in response to this set-up signal generates a ringing signal. So far, all is in correspondence with prior art. According to the invention, however, the following happens. When detecting said set-up signal including said first destination code defining said first destination of terminal 2, detection/deciding means 15 consult memory means 61, in which for example in a table in a first column said first destination code is stored and in a second column a second destination code is stored defining a second destination of for example terminal 4. In response to this, detection/deciding means 15 control coupling/removal means 11 via connection 52 in such a way that said set-up signal is also send, via for example connection 30 and connection 43, to receiving/transmitting means 13, which send said set-up signal via connection 22 to terminal 4 which in response to this set-up signal generates a ringing signal. A user owning/using terminals 2 and 4 is thus alerted at both terminals 2 and 4 (this alerting can be for example said ringing signal or an optical signal or a vibrating signal etc..).

According to a second embodiment, at said terminal 2, said user decides to call terminal 8, as a consequence of which a set-up signal is transmitted from terminal 2, via network 3 and connection 21 to switch 1. At switch 1, receiving/transmitting means 12 receive said set-up signal, and via connection 59 detection/deciding means 15 detect said set-up signal, including for example a further destination code defining a further destination of terminal 8, and possibly including for example said first destination code defining said first destination of terminal 2, or detection/deciding means 15 are informed of this first destination code due to being informed via connection 59. Via connection 52 detection/deciding means 15 control coupling/removal means 11 in such a way that said set-up signal is transmitted, via for example connection 40 and connection 30, to receiving/transmitting means 10, which send said set-up signal via connection 20 and network 9 to terminal 8 which in response to this set-up signal generates a ringing signal. According to the invention, then the following happens. When detecting said first destination code defining said first destination of terminal 2, detection/deciding means 15 consult memory means 61, in which for example in a table in a first column said first destination code is stored and in a third column a third destination code is stored defining a third destination of for example terminal 5. In response to this, detection/deciding means 15 control coupling/removal means 11 via connection 52 in such a way that said set-up signal is also send, via for example connection 40 and connection 46, to receiving/transmitting means 14, which send said set-up signal via connection 23 and network 7 to terminal 5 which in response to this set-up signal generates a ringing signal. A user owning/using terminals 2 and 5 and generating said set-up signal at terminal 2 for calling terminal 8 is thus also alerted at terminal 5 (this alerting can be for example said ringing signal or an optical signal or a vibrating signal etc..).

Of course, by adding extra columns, extra terminals could be alerted. In view of this, according to a third embodiment, detection/deciding means 15 detect said set-up signal including an indication code for for example indicating what kind of signal exchange is to be set up (for example audio or audio/video) or for for example just indicating whether and/or to which terminal(s) said set-up signal is to be further forwarded. In case of said user using terminal 4 for generating a set-up signal for setting up an Internet connection for getting access to a database, said indication code (or the absence of it) could indicate that no extra alerting is to be done. But in case of said user using terminal 4 for generating a set-up signal for setting up an Internet connection for making a Voice Over IP connection or an ordinary audio connection (via ISDN or an analog telephone line), said indication code could indicate that for example terminal 2 is to be alerted too for allowing both terminals 4 and 2 to be used by said user to give him for example a quality connection via terminal 4 as well as for example a mobile connection via terminal 2. This indication code could be added to the set-up signal automatically by a terminal (for example because of a terminal being predefined to add a predefined indication code possibly in dependence of the destination of the set-up signal or because of a terminal for example comprising detection means for detecting what kind of signal exchange is to be set up) or could be added to the set-up signal by said user, or could further be added inside switch 1, for example in detection/deciding means 15 or in receiving/transmitting means 10, 12, 13 or 14 or in coupling means 11.

According to a fourth embodiment, said user is able to adjust said indication code, for example because he adds it himself to said set-up signal, or by programming his terminal (comprising detection means and/or a memory for coupling either a certain detection or a certain destination code to a certain indication code) or by making a connection with the switch (either a full connection like a GSM connection or an ISDN B-channel connection or just a signalling connection like a GSM - SMS connection or an ISDN D-channel connection) for for example amending the content of memory means 61.

Said alerting is of course just one of several possibilities, in general a set-up signal is sent to set up a connection. It should not be excluded that said set-up signal is amended inside switch 1, for example when being transmitted to a terminal a destination code defining a destination of this terminal and/or an indication code could be removed or (partly) changed, for example to be more efficiently. Further, at each terminal, before a user action is required like for example sending and/or answering a set-up signal or adjusting a code, it could be made possible to force said user to authenticate himself, for example by letting authentication means 61 generate an authentication request signal, sending it via connection 52, 54, 56, 58 and via receiving/transmitting means 12, 13, 14 to a certain terminal, requesting said user to enter a password and/or secret code, sending it back to authentication means 61 for authentication and then activating/deactivating in response to a authentication result (whereby said activating/deactivating could take place inside switch 1 for example via detection/deciding means 15 or could take place in each terminal via activation/deactivation means for receiving an activation/deactivation signal from switch 1).

According to a fifth embodiment, there is for example a speech connection and communication in the form of the exchange of speech signals between said subscriber at terminal 8 and said user at terminal 2, for example via connection 20, receiving/transmitting means 10, connection 31, coupling/removal means 11, connection 41, receiving/transmitting means 12 and connection 21, and during this communication it is suggested to add the exchange of video signals to this communication. For example at terminal 2, said user generates a request adding signal which in network 3 in case of being a GSM network is transmitted via either a speech channel or a signalling channel and which is sent to switch 1 via connection 21. Inside switch 1 said request adding signal arrives at receiving/detection means 12, and via connection 59 detection/deciding means 15 detect said request adding signal, including for example a first destination code defining a first destination of terminal 2. When detecting said request adding signal including said first destination code defining said first destination of terminal 2, detection/deciding means 15 consult memory means 61, in which for example in a table in a first column said first destination code is stored and in a second column a second destination code is stored defining a second destination of for example terminal 4. In response to this, detection/deciding means 15 control coupling/removal means 11 via connection 52 and receiving/transmitting means 10 via connection 50 and receiving/transmitting means 13 via connection 56 in such a way that video signals originating from terminal 8 and arriving via connection 20 flow via receiving/transmitting means 10 and for example connection 32 and coupling/removal means 11 and for example connection 45 and receiving/transmitting means 13 and connection 22 to terminal 4, and vice versa. To be able to process video signals, terminal 4 should be activated, either because of being already switched on, or by sending a set-up signal originating from terminal 2 or generated inside switch 1, as described before.

Said video signals could or could not further be supplied to terminal 2 (for example having a small LCD display) under control of detection/deciding means 15, for example by controlling coupling/removal means 11 via connection 52 in such a way that connection 32 is also coupled to connection 42 and controlling receiving/transmitting means 12 via connection 58 in such a way that said speech signals arriving via connection 41 and said video signals arriving via connection 42 are combined and transmitted together via connection 21. As a first alternative, said speech signals and video signals are not separated, but sent in a combined way via connections 31 and 41 to terminal 2 and via connections 31 and 42 or via connections 32 and 42 to terminal 4. As a second alternative, inside receiving/transmitting means 12 the speech signals are separated and sent further, and inside receiving/transmitting means 13 said video signals are separated and sent further.

According to a sixth embodiment, detection/deciding means 15 detect said request adding signal, including for example said first destination code defining said first destination of terminal 2, and including said second destination code defining said second destination of terminal 4. This second destination code could be added to the request adding signal automatically by a terminal (for example because of a terminal being predefined to add a predefined destination code possibly in dependence of a user command or of the receival of a further destination code defining a further destination of terminal 8 or because of a terminal for example comprising detection means for detecting what kind of signals are exchanged) or could be added to the request adding signal by said user, or could further be added inside switch 1, for example in detection/deciding means 15 or in receiving/transmitting means 10, 12, 13 or 14 or in coupling means 11. In response to this, detection/deciding means 15 control coupling/removal means 11 as described before, etc.

According to a seventh embodiment, in view of the above described detection of what kind of signals are exchanged, in general this detection could take place inside a terminal and/or inside a switch. For example in case of video signals for the first time arriving at receiving/transmitting means 10 via connection 20, or for the first time arriving at receiving/transmitting means 12 via connection 21 or via connections 31 and 42, detection/deciding means 15 detect this arrival for example via connection 51 or 59, and consult memory means 61, etc., as decribed before. This detection of the kind of signals being exchanged could of course be done in response to said request adding signal, or completely independent of said request adding signal.

At each terminal, before an addition or amendment or a switch takes place, it could be made possible to force said user to authenticate himself at at least one or two or more terminals, for example by letting authentication means 61 generate an authentication request signal, sending it via connection 52, 54, 56, 58 and via receiving/transmitting means 12, 13, 14 to a certain terminal, requesting said user to enter a password and/or secret code, sending it back to authentication means 61 for authentication and then activating/deactivating in response to a authentication result (whereby said activating/deactivating could take place inside switch 1 for example via detection/deciding means 15 or could take place in each terminal via activation/deactivation means for receiving an activation/deactivation signal from switch 1).

According to an eighth embodiment, there is for example a speech and video connection and communication in the form of the exchange of speech signals as well as video signals between said subscriber at terminal 8 one one side and said user at terminal 2 and at terminal 4 on the other side, for example with said speech and video signals flowing via connection 20, receiving/transmitting means 10, connection 31 and coupling/removal means 11 and connection 41 and receiving/transmitting means 12 and connection 21 for terminal 2 and with said speech and video signals flowing via connection 20, receiving/transmitting means 10, connection 32 and coupling/removal means 11 and connection 44 and receiving/transmitting means 13 and connection 22 for terminal 4, in other words both terminals 2 and 4 dealing with both speech and video signals. During this communication for example said user decides that for privacy purposes said speech signals should no longer be directed towards terminal 4. For example at terminal 2, said user generates a request removal signal which in network 3 in case of being a GSM network is transmitted via either a speech channel or a signalling channel and which is sent to switch 1 via connection 21. Inside switch 1 said request removal signal arrives at receiving/detection means 12, and via connection 59 detection/deciding means 15 detect said request removal signal, including for example a first destination code defining a first destination of terminal 2 and including a second destination code defining a second destination of terminal 4 and including an indication code defining what kind of signals are to be removed/amended. This second destination code and/or this indication code could be added to the request removal signal automatically by a terminal (for example because of a terminal being predefined to add a predefined destination code possibly in dependence of a user command or of the receival of a further destination code defining a further destination of terminal 8 or because of a terminal for example comprising detection means for detecting what kind of signals are no longer received during a certain amount of time in response to which an indication code should be generated to remove a corresponding part of the connection) or could be added to the request removal signal by said user, or could further be added inside switch 1, for example in detection/deciding means 15 or in receiving/transmitting means 10, 12, 13 or 14 or in coupling means 11. When detecting said request removal signal, detection/deciding means 15 control for example either coupling/removal means 11 via connection 52 or receiving/transmitting means 13 via connection 56 in such a way that speech signals originating from terminal 8 and arriving via connection 20 flow via receiving/transmitting means 10 and for example connection 32 at coupling/removal means 11 (and for example connection 45 at receiving/transmitting means 13) are no longer sent to terminal 4, thereby allowing said user to have more privacy with respect to received speech and allowing said user and his colleagues to keep on watching received video. Of course, it is also possible to block video and to let audio pass through, and it is possible to block just one direction or both directions.

Again, said audio and video signals could be separated/combined inside each one of said receiving/transmitting means, or could be kept together, and via the same connection or via different connections sent further to different terminals.

According to a nineth embodiment, detection/deciding means 15 detect said request removal signal, including for example said first destination code defining said first destination of terminal 2, and including said second destination code defining said second destination of terminal 4, now without an indication code being present. This second destination code could be added to the request removal signal automatically by a terminal (for example because of a terminal being predefined to add a predefined destination code possibly in dependence of a user command or of the receival of a further destination code defining a further destination of terminal 8) or could be added to the request removal signal by said user, or could further be added inside switch 1, for example in detection/deciding means 15 or in receiving/transmitting means 10, 12, 13 or 14 or in coupling means 11. In response to this, detection/deciding means 15 control either receiving/transmitting means 10 or coupling/removal means 11 in such a way that for example all signals originating from terminal 8 and arriving via connection 20 are no longer sent to terminal 4, thereby allowing said user to have maximum privacy at terminal 2.

According to a tenth embodiment, in view of the above described detection of what kind of signals are no longer received during a certain amount of time in response to which an indication code could be generated to remove a corresponding part of the connection, in general this detection could take place inside a terminal and/or inside a switch. For example in case of video signals no longer arriving (during a certain amount of time) at receiving/transmitting means 10 via connection 20, or no longer arriving (during a certain amount of time) at receiving/transmitting means 12 via connection 21 or via connections 31 and 42, detection/deciding means 15 detect this absence for example via connection 51 or 59, thereby using timing means 60, etc., as decribed before. This detection of a kind of signals being no longer exchanged could of course be done in response to said request removal signal, or completely independent of said request removal signal.

At each terminal, before an removal or amendment or a switch takes place, it could be made possible to force said user to authenticate himself at at least one or two or more terminals, for example by letting authentication means 61 generate an authentication request signal, sending it via connection 52, 54, 56, 58 and via receiving/transmitting means 12, 13, 14 to a certain terminal, requesting said user to enter a password and/or secret code, sending it back to authentication means 61 for authentication and then activating/deactivating in response to a authentication result (whereby said activating/deactivating could take place inside switch 1 for example via detection/deciding means 15 or could take place in each terminal via activation/deactivation means for receiving an activation/deactivation signal from switch 1).

According to an eleventh embodiment, there is for example a speech connection and communication in the form of the exchange of speech signals between said subscriber at terminal 8 and said user at terminal 2, for example via connection 20, receiving/transmitting means 10, connection 31, coupling/removal means 11, connection 41, receiving/transmitting means 12 and connection 21, and during this communication said user wants to stop using terminal 2 and to start using terminal 5 without missing a word coming from said subscriber (for example due to a bad GSM quality at terminal 2 it could be expected to have better quality via DECT at terminal 5). For example at terminal 2, said user generates a request change signal which in network 3 in case of being a GSM network is transmitted via either a speech channel or a signalling channel and which is sent to switch 1 via connection 21. Inside switch 1 said request change signal arrives at receiving/detection means 12, and via connection 59 detection/deciding means 15 detect said request change signal, including for example a first destination code defining a first destination of terminal 2 and for example including an indication code (indicating that a change of terminal is requested). When detecting said request change signal including said first destination code defining said first destination of terminal 2, detection/deciding means 15 consult memory means 61, in which for example in a table in a first column said first destination code is stored and in a third column a third destination code is stored defining a third destination of for example terminal 5. In response to this, detection/deciding means 15 control coupling/removal means 11 and receiving/transmitting means 10, 12 and 14 in such a way subsequently that said speech signals originating from terminal 8 and arriving via connection 20 flow via receiving/transmitting means 10 and for example connection 31 and coupling/removal means 11 and for example connection 41 and receiving/transmitting means 12 to terminal 2 as well as that said speech signals originating from terminal 8 and arriving via connection 20 flow via receiving/transmitting means 10 and for example connection 32 and coupling/removal means 11 and for example connection 47 and receiving/transmitting means 14 to terminal 5, and vice versa, and, for example after a predefined time-interval, that said speech signals only flow via receiving/transmitting means 10 and for example connection 32 and coupling/removal means 11 and for example connection 47 and receiving/transmitting means 14 to terminal 5, and vice versa.

To be able to process said signals, terminal 5 should be activated, either because of being already switched on, or by sending a set-up signal originating from terminal 2 or generated inside switch 1, as described before. Said disactivation of terminal 2 could in addition or as an alternative be realised through a request removal signal originating at terminal 2 or inside switch 1 or at terminal 5.

According to a twelfth embodiment, detection/deciding means 15 detect said request change signal, including for example said first destination code defining said first destination of terminal 2, and including said third destination code defining said third destination of terminal 5. This third destination code could be added to the request change signal automatically by a terminal (for example because of a terminal being predefined to add a predefined destination code possibly in dependence of a user command or because of a terminal for example comprising detection means for detecting a signal quality) or could be added to the request change signal by said user, or could further be added inside switch 1, for example in detection/deciding means 15 or in receiving/transmitting means 10, 12, 13 or 14 or in coupling means 11. In response to this, detection/deciding means 15 control coupling/removal means 11 as described before, etc. Further, in addition to said indication code or as an alternative for said indication code, a timing code could be added to said request change signal, in response to which said timing means 60 define the lenght of said predefined time-interval. For this timing code, of course the same possibilities exist as for said third destination code as described above.

According to a thirteenth embodiment, in view of the above described detection of a signal quality, in general this detection could take place inside a terminal and/or inside a switch. This detection of a signal quality could of course be done in response to said request change signal, or completely independent of said request change signal.

At each terminal, before an amendment or a switch takes place, it could be made possible to force said user to authenticate himself at at least one or two or more terminals, for example by letting authentication means 61 generate an authentication request signal, sending it via connection 52, 54, 56, 58 and via receiving/transmitting means 12, 13, 14 to a certain terminal, requesting said user to enter a password and/or secret code, sending it back to authentication means 61 for authentication and then activating/deactivating in response to a authentication result (whereby said activating/deactivating could take place inside switch 1 for example via detection/deciding means 15 or could take place in each terminal via activation/deactivation means for receiving an activation/deactivation signal from switch 1).

Each unit situated inside switch 1 in figure 1 could be shifted to each one of said terminals 2, 4 and 5, and a copy of each unit inside switch 1 could be located inside each one of said terminals 2, 4 and 5. Then, all functions described above and taking place inside switch 1 could also take place inside each one of said terminals 2, 4 and 5, whereby in case of for example coupling/removal means as well as detection/deciding means being located in for example terminal 2, it could be required to have at least two possible couplings between terminal 2 and switch 1 (two GSM-couplings or two DECT-couplings or two corded ISDN-couplings or two corded analog-couplings or even a combination of the previous couplings), one to couple for example terminal 2 via switch 1 with terminal 8, and one to couple for example terminal 2 via switch 1 with terminal 4 or 5.

As described before, according to a first possibility said receiving/transmitting means and said coupling/removal means could deal with for example speech signals and video signals in a separated way, and according to a second possibility said means could deal with both signals in a combined way. Further according to a third possibility duplication technology could be used (meaning that separated speech signals or separated video signals or combined signals are duplicated and sent to each destination). According to a fourth possibility summation technology could be used (meaning that for example separated speech from destination A and separated speech from destination B are added and then sent to destination C), etc.

Said authentication could take place, as described before, via entering a password or a secret code, but could also be realised by using a smart card or a finger print etc. Further, said authentication could also trigger a control signal, for example the automatic generation of a set-up signal or a request change adding signal etc.

Said user should be able to adjust each possible indication code and each possible signal to be generated by him and/or to be stored, for example because he geenrates it himself, or by programming his terminal (comprising for example detection means and/or a memory for coupling for example either a certain detection or a certain destination code to a certain indication code) or by making a connection with the switch (either a full connection like a GSM connection or an ISDN B-channel connection or just a signalling connection like a GSM - SMS connection or an ISDN D-channel connection) for for example amending the content of memory means 61.

According to a first realisation having a low complexity, said receiving/transmitting means could be realised with shift registers, said coupling/removal means could be an ordinary switch, and said detection/deciding means could be a processor in which said timing means and authentication means could be (partly) realised with software cooperating with said memory means. According to a second realisation having a higher complexity, for example a first part of said receiving/transmitting means could be shifted into said coupling/removal means, and a second part could be realised with software. To a man skilled in the art and having understood said functions described above, other realisations belong to the possibilities.

## Claims

1. System comprising at least
- a first system-part substantially in the form of a first terminal,
- a second system-part substantially in the form of a second terminal,
- a third system-part substantially in the form of a switch for establishing a coupling between said first system-part and a further terminal,
characterised in that
- at least one of said first and third system-parts comprises receiving means for receiving a request change signal for requesting to change said coupling between said first system-part and said further terminal into a further coupling between said second system-part and said further terminal,
- at least one of said first and third system-parts comprises detecting means for detection of said request change signal,
- at least one of said first and third system-parts comprises coupling means for firstly establishing said coupling only and for secondly establishing said coupling and said further coupling and for thirdly establishing said further coupling only.

2. System according to claim 1, characterised in that at least one of said first and third system-parts comprises timing means for defining a predefined time-interval, with said coupling means being adapted for before start of said predefined time-interval establishing said coupling only and for during said predefined time-interval establishing said coupling and said further coupling and for after expiry of said predefined time-interval establishing said further coupling only.

3. System according to claim 2, characterised in that said detecting means are adapted to detect a timing code in said request change signal for defining a length of said predefined time-interval.

4. System according to claim 1, 2 or 3, characterised in that the system comprises a fourth system-part substantially in the form of a third terminal, whereby
- at least one of said first and third and fourth system-parts comprises further receiving means for receiving a further request change signal for requesting to change at least one of said coupling between said first system-part and said further terminal and a yet further coupling between said fourth system-part and said further terminal into said further coupling between said second system-part and said further terminal,
- at least one of said first and third and fourth system-parts comprises further detecting means for detection of said further request change signal,
- at least one of said first and second and third system-parts comprises further coupling means for firstly establishing said coupling and said yet further coupling only and for secondly establishing said coupling and said yet further coupling and said further coupling and for thirdly establishing said further coupling and at most an other one of said coupling and said yet further coupling.

5. System-part for use in a system comprising at least
- a first terminal,
- a second terminal,
- a switch for establishing a coupling between said first terminal and a further terminal,
characterised in that said system-part comprises at least
- receiving means for receiving a request change signal for requesting to change said coupling between said first terminal and said further terminal into a further coupling between said second terminal and said further terminal,
- detecting means for detection of said request change signal,
- coupling means for firstly establishing said coupling only and for secondly establishing said coupling and said further coupling and for thirdly establishing said further coupling only.

6. System-part according to claim 5, characterised in that it comprises timing means for defining a predefined time-interval, with said coupling means being adapted for before start of said predefined time-interval establishing said coupling only and for during said predefined time-interval establishing said coupling and said further coupling and for after expiry of said predefined time-interval establishing said further coupling only.

7. System-part according to claim 5 or 6, characterised in that said detecting means are adapted to detect a timing code in said request change signal for defining a length of said predefined time-interval.

8. System-part according to claim 7, characterised in that the system comprises a third terminal, whereby it comprises at least
- further receiving means for receiving a further request change signal for requesting to change at least one of said coupling between said first terminal and said further terminal and a yet further coupling between said third terminal and said further terminal into said further coupling between said second terminal and said further terminal,
- further detecting means for detection of said further request change signal,
- further coupling means for firstly establishing said coupling and said yet further coupling only and for secondly establishing said coupling and said yet further coupling and said further coupling and for thirdly establishing said further coupling and at most an other one of said coupling and said yet further coupling.

9. System-part according to claim 5, 6, 7 or 8, characterised in that it is substantially in the form of a terminal.

10. System-part according to claim 5, 6, 7 or 8, characterised in that it is substantially in the form of a switch.
